# EUROPÄISCHE PATENTANMELDUNG

(11) **EP 2 752 479 A1**
(43) Veröffentlichungstag der Anmeldung: **09.07.2014**
(21) Anmeldenummer: 13005156.8
(22) Anmeldetag: 30.10.2013
(51) Int. Cl.: C10L 5/44

(54) **Organischer Brennstoff und Verfahren zur Herstellung eines solchen**

(30) Priorität: 02.01.2013 DE 102013000009
(71) Anmelder: Propfe, Herbert, 68163 Mannheim (DE)
(72) Erfinder: Propfe, Herbert, 68163 Mannheim (DE)
(74) Vertreter: Kesselhut, Wolf

(57) **Zusammenfassung**

Ein Brennstoff für eine Holzfeuerungsanlage zur thermischen Energiegewinnung, welcher ein organisches Energieträgermaterial umfasst, das eine im Wesentlichen gleichmäßig über das Energieträgermaterial verteilte Menge an Störstoffen, insbesondere Schwefelverbindungen, enthält, die beim Verbrennungsprozess in der Feuerungsanlage in saure Rauchgasbestandteile zerfallen, zeichnet sich dadurch aus, dass das organische Energieträgermaterial zur Verringerung der sauren Rauchgasbestandteile mit Magnesiumkalk (Dolomit) vermischt ist. Die Erfindung umfasst weiterhin ein Verfahren zur Herstellung eines solchen Brennstoffs, welches sich durch die folgenden Verfahrensschritte auszeichnet: Zerkleinern eines organischen Energieträgermaterials, Vermischen des zerkleinerten Energieträgermaterials mit Magnesiumkalk und Pressen des mit Magnesiumkalk vermischen Energieträgermaterials zu Pellets.

## Beschreibung

Die Erfindung betrifft einen organischen Brennstoff und ein Verfahren zur Herstellung eines solchen sowie eine neuartige Verwendung von Magnesiumkalk gemäß dem Oberbegriff von Anspruch 1, 9 und 10.

Zur Verringerung von Emissionen bei der thermischen Energieerzeugung aus fossilen Brennstoffen oder aus Biomasse ist es heutzutage bekannt, die beim Verbrennungsprozess in Großkraftwerken entstehenden schadstoffhaltigen Rauchgase in einem aufwändigen mehrstufigen Reinigungsprozess von den Schadstoffen zu befreien. Hierzu werden die Rauchgase unter anderem auch mit Magnesiumkalkverbindungen beaufschlagt, um die sauren Bestandteile, wie z.B. Schwefeldioxid, zu binden.

In diesem Zusammenhang ist es aus der DE 37 16 610 A1 bekannt, die Rauchgase einer Kleinfeuerungsanlage in einer nachgeordneten Reinigungsvorrichtung zur Neutralisation zunächst über einen Granulat-Festbettfilter zu leiten, der unter anderem Dolomit und Magnesit enthält. Die Schrift gibt keinen Hinweis darauf, die Temperatur und den Volumenstrom des ungereinigten Rauchgases auf die Menge des mit dem Rauchgas reagierenden Dolomits einzustellen, so dass nur eine grobe Reinigung der Rauchgase erfolgt. Zudem erfordert die Reinigungseinrichtung einen ständigen Austausch, bzw. Nachschub an Neutralisationsstoffen sowie eine Beseitigung der beim Neutralisationsprozess entstehenden Reststoffe.

Demgemäß ist es eine Aufgabe der vorliegenden Erfindung, einen organischen Brennstoff sowie ein Verfahren zur Herstellung eines solchen bereit zu stellen, mit welchem sich saure Schadstoffverbindungen, die beim Verbrennungsprozess in einer Feuerungsanlage entstehen, mit geringem Aufwand vermeiden lassen.

Es ist eine weitere Aufgabe der Erfindung, eine neuartige Verwendung von Magnesiumkalk anzugeben, mit der sich saure Rauchgasbestandteile bei der Verbrennung eines organischen Energieträgermaterials in einer Kleinfeuerungsanlage von vorneherein mit geringem Aufwand und zu vertretbaren Kosten reduzieren lassen.

Diese Aufgaben werden erfindungsgemäß durch die Merkmale von Anspruch 1, 9 und 10 gelöst.

Weitere Merkmale der Erfindung sind in den Unteransprüchen beschrieben.

Gemäß der Erfindung umfasst ein Brennstoff für eine Holzfeuerungsanlage ein organisches Energieträgermaterial, das eine im Wesentlichen gleichmäßig über das Energieträgermaterial verteilte Menge an Störstoffen, insbesondere Schwefelverbindungen oder auch Phosphorverbindungen enthält, die Teil der Struktur des Energieträgermaterials sind und die beim Verbrennungsprozess in der Feuerungsanlage bei Temperaturen im Bereich von ca. 700 C in saure Rauchgasbestandteile zerfallen. Die sauren Rauchgasbestandteile treten dabei in erster Linie in Form von Schwefeldioxid auf, das mit dem beim Verbrennungsprozess ebenfalls entstehenden Wasser z.B. zu schwefeliger Säure oder Schwefelsäure reagiert.

Die Erfindung zeichnet sich dadurch aus, dass das organische Energieträgermaterial zur Verringerung der sauren Rauchgasbestandteile mit Magnesiumkalk vermischt wird, welcher bevorzugt gemahlen oder in sonstiger Weise zerkleinert ist und beispielsweise in Form von bekanntem Dolomit bereitgestellt wird. Der Magnesiumkalk wird dem organischen Energieträgermaterial hierbei im Wesentlichen homogen beigemischt, beispielsweise durch Mischen von pulverförmigem Magnesiumkalk und zerkleinertem Energieträgermaterial, wodurch sich der Vorteil ergibt, dass sich der erfindungsgemäße Brennstoff mit einem vergleichsweise geringen energetischen Aufwand sowie auch einem geringen Vorrichtungs-aufwand in großen Mengen herstellen lässt. Der Magnesiumkalk wird dabei bevorzugt in Form von Dolomit als Mineral bereitgestellt, das die chemische Zusammensetzung CaMg [C0₃]₂ besitzt.

Durch die Erfindung ergibt sich der Vorteil, dass sich der Magnesiumkalk beim Verbrennungsprozess ab einer Temperatur von 600 ° C zersetzt, wobei CaO und CO₂ entstehen, von denen das Calciumoxid während der Verbrennung mit den sauren Schwefelbestandteilen des Rauchgases zu Calciumsulfat (CaSO₄) reagiert.

Ein weiterer Vorteil der Erfindung besteht darin, dass der Kalkgehalt in der zurückbleibenden Asche des Energieträgermaterials auf einen Anteil von mehr als 15 Gewichtsprozent bezogen auf das Gesamtgewicht der Asche ansteigt, wodurch sich die Asche ohne eine weitergehende chemische Nachbehandlung als Dünger einsetzen lässt. Die im Rauchgas enthaltenen sauren Schwefelverbindungen liegen dabei in der Asche des erfindungsgemäßen Brennstoffs als Calciumsulfat oder Calciumhydrogensulfat vor, was dazu führt, dass die Asche direkt als Dünger verwendet werden kann, da es sich bei diesen Stoffen nicht um Gefahrenstoffe handelt.

Ein weiterer Vorteil der Erfindung besteht darin, dass sich der Magnesiumkalk in großen Mengen günstig, insbesondere aus Dolomit, wissenschaftlich Dolomitstein, gewinnen lässt, welches zu 90 Prozent aus dem Mineral Dolomit (Magnesiumkalk) besteht.

Bei der bevorzugten Ausführungsform der Erfindung liegt der Anteil an gemahlenem Magnesiumkalk im Bereich zwischen 1 Gew.-% und 8 Gew.-%, vorzugsweise zwischen 1,5 Gew.-% und 6 Gew.-% und besonders bevorzugt zwischen 2 Gew.-% und 4 Gew.% ,bezogen auf das Trockengewicht des gesamten Gemischs aus Magnesiumkalk und Energieträgermaterial.

Wie vom Anmelder gefunden wurde, ergibt sich bei den zuvor genannten Anteilen an Magnesiumkalk im organischen Energieträgermaterial eine nahezu vollständige Neutralisation der im Rauchgas enthaltenen sauren Schwefelbestandteile.

Bei dem organischen Energieträgermaterial handelt es sich bevorzugt um zerkleinertes Naturholz, welches keiner chemischen Behandlung, wie insbesondere einer Imprägnierung, unterzogen wurde, sondern welches zuvor bevorzugt lediglich getrocknet wurde, um den Wassergehalt zu reduzieren. Das Holz wird hierbei bevorzugt in Form von Holzhäckseln oder Holzspänen bereitgestellt, welche beispielsweise bei Baumfällarbeiten oder auch in Sägewerken beim Zersägen von Naturholz gewonnen werden, kann jedoch auch aus zerkleinertem Grünschnitt oder auch aus Weintrester oder einem sonstigen Naturbrennstoff wie beispielsweise Stroh, Heu, Holzhäcksel und Sägespänen aus Naturholz bestehen.

Gemäß einem weiteren der Erfindung zugrundeliegenden Gedanken, der eine sehr homogene Verteilung von Magnesiumkalk im Energieträgermaterial ermöglicht, welche zu einer in hohem Maße zuverlässigen Reduzierung der sauren Rauchgasbestandteile während des gesamten Verbrennungsprozesses in einer vorgegebenen Menge an Energieträgermaterial führt, wird das Energieträgermaterial zunächst zerkleinert, beispielsweise zu Partikeln, die einen Durchmesser im Bereich von z.B. 0,5 bis 1,5 mm besitzen. Diese werden sodann mit pulverförmigem, bevorzugt gemahlenem Magnesiumkalk in dem zuvor erwähnten Mengenverhältnis vermischt, wodurch sich ein sehr gleichförmiges homogenes Gemisch aus den Partikeln des Energieträgermaterials und dem zugefügten Magnesiumkalk ergibt. Im Anschluss daran wird das Gemisch in bekannter Weise zu Pellets verpresst, die beispielsweise einen Durchmesser zwischen 6 mm und 25 mm und eine Länge zwischen 3 mm und 50 mm besitzen können. Der Wassergehalt in den gepressten Pellets liegt dabei unter 15 %, bevorzugt unter 10 %, bezogen auf das Gesamtgewicht des fertigen Produkts.

Im Falle von chemisch unbehandelten Holzhäckseln sowie auch getrocknetem und zerkleinertem Grünschnitt wird bei einer besonders bevorzugten Ausführungsform der Erfindung ein Anteil von 2 Gew.-% bis 4 Gew.-% an pulverförmigem gemahlenem Magnesiumkalk mit dem zerkleinerten Energieträgermaterial vermischt, wobei das Vermischen vorzugsweise vor dem Trocknen des Energieträgermaterials vorgenommen wird. Hierdurch ergibt sich der Vorteil, dass über die in den Holzhäckseln bzw. in den zerkleinerten Grünschnitten enthaltene Restfeuchtigkeit vor dem Trockenvorgang eine gewisse Bindung zwischen dem pulverförmigen Magnesiumkalk und dem Energieträgermaterial erhalten wird, die einer Entmischung des Brennstoffs entgegenwirkt.

Bei der bevorzugten Ausführungsform der Erfindung besitzt der Magnesiumkalk eine durchschnittliche Korngröße mit einem Durchmesser im Bereich von 10 µm und 500 µm, insbesondere zwischen 50 und 150 µm. Hierdurch wird sichergestellt, dass sich das Energieträgermaterial mit dem Magnesiumkalk sehr gut vermischen und gegebenenfalls zu Pellets verpressen lässt und eine vollständige Zersetzung der Magnesiumkalkpartikel während des Verbrennungsprozesses bei Temperaturen ab 600 ° C in einer Holz- bzw. Pellet-Kleinfeuerungsanlage, wie sie z.B. zum Beheizen von Einfamilienhäusern eingesetzt wird, gewährleistet ist. Zudem lässt sich der pulverförmige Magnesiumkalk bei den zuvor erwähnten bevorzugten Korngrößen kostengünstig in großen Mengen beziehen und auch als Schüttgut handhaben, was den Mischprozess von Energieträgermaterial und Kalk vereinfacht und dementsprechend die Kosten des Brennstoffs insgesamt verringert.

Nach einem weiteren der Erfindung zugrunde liegenden Gedanken kann der erfindungsgemäße Brennstoff zusätzlich noch Siliziumverbindungen enthalten, die beispielsweise in Form von Siliziumoxid oder sonstigen pulverförmigen Siliziumverbindungen dem Energieträgermaterial zugemischt werden. Hierbei werden bevorzugt die pulverförmigen Siliziumverbindungen zunächst mit dem pulverförmigen Magnesiumkalk vermischt und dann im Anschluss daran das Gemisch aus Magnesiumkalk und Siliziumverbindungen mit dem Energieträgermaterial vermengt.

Hierdurch ergibt sich der Vorteil, dass die sauren Rauchgasbestandteile weiter reduziert und der Anteil an Siliziumverbindungen und Kalk in der Asche erhöht wird, was die wachstumsfördernden Eigenschaften der Asche verbessert, wenn diese als Dünger verwendet wird.

Nach einem weiteren der Erfindung zugrunde liegenden Gedanken umfasst ein Verfahren zur Herstellung des erfindungsgemäßen organischen Brennstoffs für Holzfeuerungsanlagen die folgenden Verfahrensschritte:
- Verbrennen einer ersten Menge des Trägermaterials und Bestimmen der im Rauchgas enthaltenen Menge an sauren Rauchgasbestandteilen,
- Ermitteln einer ersten Menge an Magnesiumkalk, die erforderlich ist, um die sauren Rauchgasbestandteile in der ersten Menge des Trägermaterials während des Verbrennungsprozesses im Wesentlichen vollständig zu neutralisieren und
- Bereitstellen einer zweiten Menge des Energieträgermaterials und Vermischen derselben mit einer zweiten Menge an Magnesiumkalk, die dem Produkt aus der zweiten Menge des Energieträgermaterials multipliziert mit dem Verhältnis der ersten Menge des Magnesiumkalks zur ersten Menge des Energieträgermaterials entspricht.

Obgleich ebenfalls die Möglichkeit besteht, die minimale Menge an Magnesiumkalk, die einem Energieträgermaterial mit einem unbekannten Gehalt an Störstoffen beigegeben werden muss, empirisch durch Messen des Anteils der sauren Rauchgasbestandteile und Erhöhen oder Verringern der zugegebenen Menge an Magnesiumkalk zu bestimmen, lässt sich der Mindestanteil an Magnesiumkalk, der einer vorgegebenen Menge eines Energieträgermaterials beigemischt werden muss, um die sauren Bestandteile vollständig zu neutralisieren, durch den Einsatz des zuvor beschriebenen erfindungsgemäßen Verfahrens mit großer Genauigkeit ermitteln. Dadurch wird eine Überdosierung der zugefügten Menge an Magnesiumkalk vermieden, was die Kosten für dessen Bereitstellung verringert. Eine Überdosierung der zugefügten Menge an Magnesiumkalk, mit der das Entstehen von sauren Rauchgasbestandteilen vollständig ausgeschlossen werden kann, ist jedoch jederzeit möglich und erhöht lediglich die Menge an chemisch neutralem Kalziumsulfat in der Asche, was bei der Verwendung derselben als Düngemittel durchaus auch erwünscht sein kann.

Ein weiterer der Erfmdung zugrunde liegender Gedanke umfasst die Verwendung von gemahlenem oder in sonstiger Weise zerkleinertem Magnesiumkalk als Zuschlagstoff für ein organisches Energieträgermaterial, welches in Form von zerkleinerter und getrockneter Biomasse bei der thermischen Energiegewinnung in einer Holzfeuerungsanlage bereit gestellt wird. Diese neuartige Verwendung zeichnet sich dadurch aus, dass der gemahlene Magnesiumkalk (Dolomit) dem getrockneten organischen Energieträgermaterial vor seiner Zufuhr in die Holzfeuerungsanlage in einem vorgegebenen Mengenverhältnis im Wesentlichen homogen beigemischt wird. Die durchschnittlichen Korngrößen sowie auch Mengenverhältnisse sind dabei dieselben, wie vorhergehend angegeben.

### Ausführungsbeispiel:

Einer Menge von 10 Kg Holzhäckseln aus getrocknetem und unbehandeltem Fichtenholz mit einem durchschnittlichen Durchmesser von 1,2 cm und 1,5 cm und einem Restfeuchtegehalt von ca. 8% wurden 200 g gemahlener pulverförmiger Magnesiumkalk mit einer durchschnittlichen Korngröße von 0,2 mm beigegeben und das Ganze in einem mechanischen Mischwerk mit Knethaken 5 min vermischt. Das entstandene Gemisch wurde in den Feuerraum einer Kleinfeuerungsanlage für Holz eingefüllt und dort bei Temperaturen zwischen 600 °C und 850 °C verbrannt. Während des Verbrennungsvorgangs wurde der Gehalt an Schwefeldioxid im Rauchgas mit einem Sensor erfasst, der nach dem Erreichen einer Rauchgastemperatur von ca. 650°C unterhalb der Nachweisschwelle des Sensors lag.

## Patentansprüche

1. Brennstoff für eine Holzfeuerungsanlage zur thermischen Energiegewinnung, welcher ein organisches Energieträgermaterial umfasst, das eine im Wesentlichen gleichmäßig über das Energieträgermaterial verteilte Menge an Störstoffen, insbesondere Schwefelverbindungen, enthält, die beim Verbrennungsprozess in der Feuerungsanlage in saure Rauchgasbestandteile zerfallen,
**dadurch gekennzeichnet,**
**dass** das organische Energieträgermaterial zur Verringerung der sauren Rauchgasbestandteile mit Magnesiumkalk vermischt ist.

2. Brennstoff nach Anspruch 1,
**dadurch gekennzeichnet,**
**dass** der Anteil an Magnesiumkalk im Bereich zwischen 1 Gew.-% und 8 Gew.-%, vorzugsweise zwischen 1,5 Gew.% und 6 Gew.-% und besonders bevorzugt zwischen 2 Gew.-% und 4 Gew.% bezogen auf das Trockengewicht des gesamten Gemischs liegt.

3. Brennstoff nach einem der vorhergehenden Ansprüche,
**dadurch gekennzeichnet,**
**dass** das Energieträgermaterial ausgewählt ist aus zerkleinertem, insbesondere chemisch unbehandeltem Holz, Grünschnitt und Weintrester.

4. Brennstoff nach Anspruch 3,
**dadurch gekennzeichnet,**
**dass** das mit Magnesiumkalk vermischte Energieträgermaterial zu Pellets verpresst ist.

5. Brennstoff nach einem der Ansprüche 1 bis 3,
**dadurch gekennzeichnet,**
**dass** das Energieträgermaterial chemisch unbehandelte Holzhäcksel oder getrockneten und zerkleinerten Grünschnitt umfasst, und dass der Anteil an gemahlenem Magnesiumkalk im Bereich zwischen 2 Gew.- % und 4 Gew.-%, jeweils bezogen auf das Gesamtgewicht des Gemischs, liegt.

6. Brennstoff nach einem der vorhergehenden Ansprüche,
**dadurch gekennzeichnet,**
**dass** der Anteil an beigemischtem gemahlenem Magnesiumkalk im Gesamtgemisch in Abhängigkeit von der im Energieträgermaterial enthaltenen gesamten Menge an Störstoffen gewählt ist.

7. Brennstoff nach einem der vorhergehenden Ansprüche,
**dadurch gekennzeichnet,**
**dass** der Magnesiumkalk eine durchschnittliche Korngröße mit einem Durchmesser im Bereich zwischen 10 Mikrometern und 500 Mikrometern, insbesondere 50 und 150 Mikrometern besitzt.

8. Brennstoff nach einem der vorhergehenden Ansprüche,
**dadurch gekennzeichnet,**
**dass** dieser zusätzlich Siliziumverbindungen enthält.

9. Verfahren zur Herstellung eines Brennstoffs für Holzfeuerungsanlagen nach einem der vorhergehenden Ansprüche, welcher ein organisches Energieträgermaterial enthält, dass eine im Wesentlichen gleichmäßig über das Energieträgermaterial verteilte Menge an Störstoffen, insbesondere Schwefelverbindungen, enthält, die beim Verbrennungsprozess in der Feuerungsanlage in saure Rauchgasbestandteile zerfallen, **gekennzeichnet durch** die folgenden Verfahrensschritte:
Zerkleinern des Energieträgermaterials, Vermischen des zerkleinerten Energieträgermaterials mit Magnesiumkalk und Pressen des mit Magnesiumkalk vermischen Energieträgermaterials zu Pellets.

10. Verwendung von gemahlenem Magnesiumkalk (Dolomit) als Zuschlagstoff für ein organisches Energieträgermaterial in Form von zerkleinerter und getrockneter Biomasse bei der thermischen Energiegewinnung in einer Holzfeuerungsanlage,
**dadurch gekennzeichnet,**
das der gemahlene Magensiumkalk dem getrockneten organischen Energieträgermaterial vor der Zufuhr in die Holzfeuerungsanlage in einem vorgegebenen Mengenverhältnis im Wesentlichen homogen beigemischt wird.
